# EUROPÄISCHE PATENTSCHRIFT

(11) **EP 0 895 960 B1**
(45) Veröffentlichungstag und Bekanntmachung des Hinweises auf die Patenterteilung: **23.08.2000**
(21) Anmeldenummer: 98112749.1
(22) Anmeldetag: 09.07.1998
(51) Int. Cl.: B67D 5/04, B67D 5/01

(54) **Verfahren und Anlage zur Abgabe von Flüssigkeit aus einem mehrere Kammern enthaltenden Tankwagen**
Process and device for dispensing liquid from a truck comprising multiple storage tanks
Procédé et dispositif de distribution de liquide à partir d'un véhicule citerne comportant plusieurs compartiments de stockage

(30) Priorität: 04.08.1997 DE 19733715
(43) Veröffentlichungstag der Anmeldung: 10.02.1999
(73) Patentinhaber: ALFONS HAAR Maschinenbau GmbH & Co., D-22547 Hamburg (DE)
(72) Erfinder: Haar, Thomas, 25469 Halstenbek (DE)
(74) Vertreter: Patentanwälte Hauck, Graalfs, Wehnert, Döring, Siemons

(56) Entgegenhaltungen:
- EP-A- 0 030 509
- EP-A- 0 391 806
- DE-U- 29 706 218
- US-A- 2 934 102

## Beschreibung

Die Erfindung bezieht sich auf ein Verfahren zum Betrieb einer Anlage zur Abgabe von Flüssigkeit aus einem mehrere Kammern enthaltenden Tankwagen im wesentlichen durch Schwerkraft nach dem Patentanspruch 1, sowie auf eine Anlage nach dem Patentanspruch 2 zur Durchführung des Verfahrens.

Es ist bekannt, Flüssigkeiten, die in Kammern eines Tankwagens enthalten sind, entweder über Schwerkraft oder den Einsatz von Pumpen abzugeben. Die einzelnen Kammern weisen normalerweise sog. Bodenventile auf, die über Leitungsstücke mit Kupplungen verbunden sind. Die Kupplungen sind üblicherweise Befüllkupplungen und werden mit einem Ladearm oder dergleichen verbunden, um die Kammern aus einem Depot mit einer Flüssigkeit zu füllen. Die Flüssigkeiten können durchaus unterschiedlicher Natur sein. Handelt es sich um flüssige Brennstoffe, können die Kammern z.B. Benzin unterschiedlicher Art oder Dieselkraftstoff enthalten. Die Abgabe aus den Kammern erfolgt entweder direkt oder über Sammelleitungen bzw. Kollektoren der Tankwagen. Derartige als Sammelleitungen bzw. Kollektoren dienende Abgabeleitungen kreuzen die Leitungsstücke zwischen Bodenventil und Befüllkupplung, wobei an den Kreuzungspunkten Ventile angeordnet sind, um eine gewünschte oder mehrere gewünschte Kammern gemeinsam an die Abgabeleitung anzuschließen. In der Abgabeleitung befindet sich üblicherweise ein Volumenzähler aufströmseitig vom Abgabeventil, das am Ende der Abgabeleitung angeordnet ist.

Für die Abgabe von Flüssigkeit wird das Abgabeventil geöffnet. Es wird geschlossen, wenn das gewünschte Volumen abgegeben worden ist oder wenn Umstände eintreten, welche eine weitere Abgabe unzulässig werden lassen. Dies ist der Fall bei Auftreten eines bestimmten Anteils von Gaseinschlüssen, die bei volumetrischen Meßsystemen naturgemäß zu einer Fehlmessung führen.

Aus der EP 0 035 217 A2 ist eine Vorrichtung zur Verhinderung des Mitmessens gasförmiger Beimengungen bei der Abgabe von Flüssigkeiten bekannt geworden, bei der eine Druckmeßvorrichtung den Druck einer geodätischen Zulaufhöhe oberhalb des Druckmeßpunktes mißt. Die Absperrarmatur, die im Querschnitt verstellbar ist, wird entsprechend dem Ausgangssignal der Druckmeßvorrichtung betätigt. Gelangt der gemessene Druck unter einen vorgegebenen Wert, wird der Strömungsquerschnitt des Abgabeventils reduziert. Hierbei wird von der Tatsache Gebrauch gemacht, daß so lange ein ausreichender positiver Druck vor dem Volumenzähler ansteht, der Anteil gasförmiger Beimengungen unterhalb zulässiger Grenzen liegt. Fällt der Druck vor dem Mengenzähler ab, beispielsweise wegen der Abnahme der geodätischen Zulaufhöhe bei der Restentleerung eines zu leerenden Behälters, ist hiermit ein Indikator dafür gegeben, daß der Anteil gasförmiger Beimengungen ansteigt. Besteht die Gefahr der Zumischung von Gasbestandteilen, wird das Abgabeventil gedrosselt, wodurch die Flüssigkeit im zu leerenden Behälter beruhigt wird (Vermeidung von Wirbelbildung). Die geodätische Zulaufhöhe kann wieder ansteigen, solange nicht eine vollständige Entleerung stattfindet. Ein derartiges System kann ohne eine Gasausscheidungsvorrichtung auskommen. Die Eichvorschriften verlangen jedoch bei Nichtvorhandensein einer Entgasungseinrichtung, daß der Meßfehler Null ist. Dies läßt sich naturgemäß nicht erreichen.

Aus der DE 195 40 884 A1 ist ein Verfahren zum Messen des Volumens durchströmender Flüssigkeiten bekannt geworden, bei dem der Gasanteil der durch eine Leitungsstrecke strömenden Flüssigkeit erfaßt und die Abweichung des erfaßten Gasanteils von einem zulässigen Wert ermittelt wird. Der Volumenstrom der Flüssigkeit wird in Abhängigkeit von der ermittelten Abweichung in mehreren Stufen oder stetig beeinflußt. Der durch Selbstausgasung austretende Gasanteil in der Leitungsstrecke wird gesammelt. Ferner wird das Niveau der Flüssigkeit erfaßt und der ausgetretene Gasanteil abgegeben, sobald das Niveau einen bestimmten Wert erreicht hat. Mit dieser Meßtechnik kann der eichpflichtige Flüssigkeitsstrom entlang einer vorgegebenen Eichfehlergrenze bis nahe zur getrennten Flüssigkeit/Luftphasenströmung heruntergeregelt werden, ohne daß die Flüssigkeitsabgabe unterbrochen werden muß und die Meßanlage einen unzulässigen Fehler macht. Die eichpflichtige Flüssigkeitsabgabe kann mithin sehr effizient ohne häufige lästige Ein- und Abschaltvorgänge der Meßanlage erfolgen.

Wird bei der beschriebenen Entleerung von Kammern von Tankwagen zunächst eine erste und im Anschluß daran eine zweite Flüssigkeit abgegeben, kann sich die erste Flüssigkeit im Umfang der in der Abgabeleitung befindlichen Menge mit der zweiten vermischen. Bisher besteht eine Forderung der Eichvorschriften darin, die Restentleerung der Abgabeleitung zu vermeiden. Es kann daher vorkommen, daß z.B. Dieselkraftstoff mit Benzin vermischt wird oder verbleites mit unverbleitem Benzin. Der Grund für das Verbot der Restentleerung liegt darin, daß eine blasenbehaftete Wiederabgabe befürchtet wird.

Der Erfindung liegt die Aufgabe zugrunde, ein den eichtechnischen Anforderungen genügendes Verfahren zum Betrieb einer Anlage bzw. eine Anlage zur Abgabe von Flüssigkeit aus einem mehrere Kammern enthaltenden Tankwagen im wesentlichen durch Schwerkraft sowie zum Messen der abgegebenen Flüssigkeit anzugeben, mit dem mit geringem apparativen Aufwand und bei reduziertem Platzbedarf eine große Leistungsfähigkeit erzielt wird.

Diese Aufgabe wird durch die Merkmale des Patentanspruchs 1 bzw. Patentanspruch 2 gelöst.

Bei der Erfindung ist es möglich, eine Restentleerung bei der Abgabe vorzusehen, ohne daß eichtechnische Probleme entstehen. Bei einer erneuten Abgabe, z. B. aus einer anderen Kammer, wird vor Beginn das Abgabeventil geschlossen, wobei sich dann die Abgabeleitung bis zum Abgabeventil wieder füllen und die aus der Abgabeleitung verdrängte Luft über das geöffnete Bodenventil entweichen kann. Mit Hilfe eines für die gasfreie Flüssigkeitsabgabe vorgesehenen Gasblasensensors, wie an sich aus der obigen Beschreibung als bekannt diskutiert, kann festgestellt werden, wann die Abgabeleitung ausreichend gefüllt ist. Hierfür ist allerdings Voraussetzung, daß der Gasblasensensor sehr nahe am Kollektor liegt.

Ein weiteres nicht unwichtiges Merkmal der Erfindung besteht darin, daß die Mengenmessung mit Hilfe eines mittelbaren Volumenzählers stattfindet. Mittelbare Volumenzähler werden zumeist gebildet von einem mit Schaufeln oder Flügeln besetzten Laufrad, das durch das strömende Medium in Drehbewegung versetzt wird. Dies im Gegensatz zu sog. Verdrängungszählern, bei denen ein unmittelbares Meßelement bei jedem Hub oder jeder Umdrehung ein bestimmtes Volumen transportiert oder verdrängt. Ein mittelbarer Volumenzähler stellt sicher, daß die Anlage vollständig leer laufen kann bzw. bei einem erneuten Abgabebeginn blasenfrei befüllt werden kann. Die bei der Erfindung mögliche Restentleerung vermeidet auch jegliche Vermischung bei einem Produktwechsel.

Während der Flüssigkeitsabgabe mißt der Gasblasensensor den Gasanteil und steuert über die elektronische Steuerung das Abgabeventil auf kleineren Durchfluß oder auf Durchfluß Null, je nach dem, wie hoch der gemessene Gasanteil ist. Eine Verringerung des Strömungsquerschnitts führt naturgemäß zu einer geringeren Eintragung von Luft beim Entleeren aus einer Kammer, wenn sich das Flüssigkeitsniveau der Öffnung des Bodenventils nähert. Steigt der Gasanteil zu stark an, kann das Abgabeventil geschlossen werden. Eine Ansammlung von Gasen aufgrund mitgerissenen Gases kann im oberen Bereich der Abgabeleitung bzw. im Kollektor stattfinden. Mit Hilfe einer Entlüftungsleitung kann das Gas von dort in gewünschter Weise abgeführt werden. Bei dem sog. Gaspendelverfahren erfolgt die Entlüftung in die zugeordnete in der Entleerung begriffene Kammer des Tankwagens. Die Entgasung kann von dem Gasblasensensor gesteuert werden und, von einem Leermeldesensor, der dem Abgabeventil zugeordnet ist. Mit Hilfe des Leermeldesensors wird nämlich festgestellt, ob die Restentleerung tatsächlich von statten gegangen ist.

Während der Restentleerung wird das Signal vom Volumenzähler unterdrückt. In der elektronischen Steuerung wird zu dem zuvor aufgelaufenen Volumenwert das Volumen hinzu addiert, das durch das bekannte Volumen der Abgabeleitung zwischen dem Pegel, bei dem die normale Abgabe gestoppt wird, und dem Leermeldesensor, gebildet ist. Nach der Restentleerung wird dann das Abgabeventil wieder geschlossen. Der beschriebene Vorgang kann beliebig häufig wiederholt werden je nach Anzahl der Kammern, über die der Tankwagen verfügt. Es versteht sich, daß das erfindungsgemäße Verfahren einen Betrieb auch zuläßt, bei dem nur eine Teilentleerung einer Kammer stattfindet.

Eine Anlage zur Durchführung des Verfahrens läßt sich ohne großen Aufwand erstellen. Die Aggregate für die Schwerkraftabgabe bei der erfindungsgemäßen Anlage sind obligatorisch, nämlich Volumenzähler, Abgabeventil, Leermeldesensor und eine Vorrichtung zur Verhinderung des Mitmessens von Gasanteilen. Die Erfindung sieht eine sinnreiche Steuerung der einzelnen Aggregate vor, die eine leistungsstarke Abgabe von Flüssigkeit zuläßt (z. B. durch Verwendung eines mittelbaren Volumenzählers). Ein besonderer Vorteil liegt darin, daß eine Produktvermischung vermieden werden kann. Die erfindungsgemäße Anlage ist leicht und flach und läßt sich ohne Gewichtsnachteile auf dem Tankwagen installieren. Der Kollektor öffnet die Möglichkeit, mehrere Kammern gleichzeitig mit einem Lagertank zu verbinden und so eine größere Abgabeleistung zu erreichen und das Umkuppeln von Schläuchen von einer zur anderen Kammer zu vermeiden. Falls ein sog. Doppelkollektor vorgesehen wird, können zwei Produkte gleichzeitig nach dem erfindungsgemäßen Verfahren abgegeben werden.

Zum Ausgleich der üblichen Leistungsverluste bei der Schwerkraftabgabe kann bei der erfindungsgemäßen Anlage eine Beschleunigerpumpe vorgesehen werden. Sie wird zwischen Kollektor und Gasblasensensor angeordnet, ohne unzulässigen Druck im Lagerbehälter aufzubauen. Aus Sicherheitsgründen dürfen bestimmte Flüssigkeiten nicht in Lagertanks verpumpt werden, sondern können nur durch Schwerkraftabgabe abgefüllt werden. Eine Beschleunigerpumpe, die nicht nach dem Verdrängerprinzip arbeitet, verhindert den Aufbau eines unzulässigen Drucks im Lagerbehälter. Mit Hilfe dieser Maßnahme kann die Abgabezeit deutlich verringert werden.

Nach einer weiteren Ausgestaltung der Erfindung kann parallel zur Abgabeleitung zwischen Kollektor und Gasblasensensor eine Verdrängerpumpe angeordnet werden. Häufig enthalten Tankwagen verschiedene Sorten von Flüssigkeiten, von denen die eine mit Verdrängerpumpen abgeladen werden kann (z. B. Dieselkraftstoff) und andere nicht (Benzin). So kann z. B. Dieselkraftstoff aus entsprechenden Kammern des Tankwagens mit Hilfe der Verdrängerpumpe anstatt durch Schwerkraftabgabe abgefüllt werden.

Ein Ausführungsbeispiel der Erfindung wird nachfolgend näher erläutert.

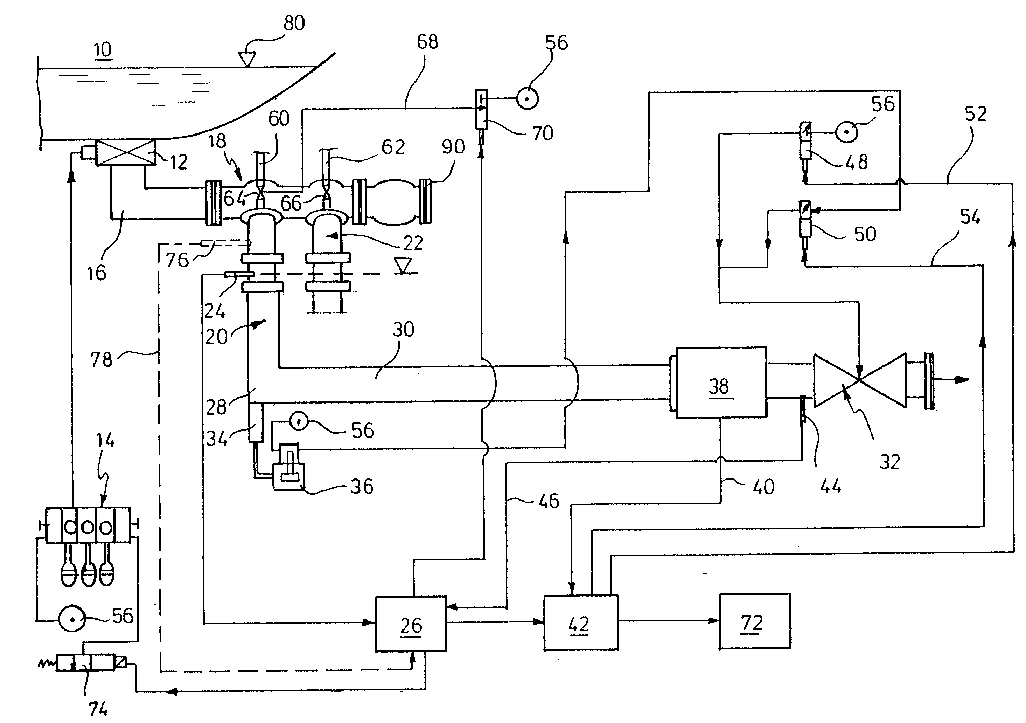

Die einzige Figur zeigt schematisch eine Anlage nach der Erfindung.

In der Figur ist eine Kammer 10 eines nicht näher dargestellten Tankwagens angedeutet. Der Tankwagen kann eine Mehrzahl von derartigen Kammern 10 aufweisen. Die Kammer 10 weist an der Unterseite ein Bodenventil 12 auf, das in bekannter Weise über einen Steuerblock 14 pneumatisch betätigt wird. Ein Leitungsstück 16 führt vom Bodenventil 12 zu einem Kollektor 18, der im einzelnen nicht dargestellt ist, jedoch ebenfalls Stand der Technik ist. Ein Kollektor 18 ist zwischen den Bodenventilen 12 eines Tankwagens einerseits und den Befüllkupplungen 90 andererseits angeordnet. Die Befüllung der Tankkammern 10 erfolgt durch zugeordnete Befüllkupplungen 90. Die Abgabe der Flüssigkeiten aus den Tankkammern 10 erfolgt jedoch über eine gemeinsame Leitung, die über entsprechende Ventile an den Kreuzungspunkten der gemeinsamen Leitung mit der Verbindungsleitung zwischen Bodenventil und Befüllkupplung 90 an eine entsprechende Kammer anschließbar ist. Bei 18 ist ein sog. Doppelkollektor vorgesehen mit zwei Abgabeleitungen 20, 22. Nachstehend wird nur die Abgabeleitung 20 behandelt. Gleiches gilt dann für die Abgabeleitung 22.

Relativ nahe am Kollektor 18 ist der Abgabeleitung 20 ein Gasblasensonsor 24 zugeordnet, der mit einem elektronischen Steuerteil 26 verbunden ist. Die Abgabeleitung 20, die sich zunächst annähernd vertikal nach unten erstreckt, geht in einem Bogen 28 in einen mit geringem Gefälle sich erstreckenden Teil 30 über, an dessen Ende ein Abgabeventil 32 angeordnet ist. An das Abgabeventil 32 kann ein Schlauch angeschlossen werden, um die Flüssigkeit z. B. in einen Lagertank abzugeben.

Im Bereich des Bogens 28 ist ein Drucksensor 34 angeordnet, der mit einem Druckschalter 36 verbunden ist. Aufströmseitig vom Abgabeventil 32 ist ein mittelbarer Volumenzähler 38 in der Leitung 20 angeordnet, beispielsweise ein Turbinenzähler. Über eine Wirkungsleitung 40 gelangt das Signal des Turbinenzählers 38 auf eine elektronische Steuerung 42. Unmittelbar aufströmseitig des Abgabeventils 32 ist ein Leermeldesensor 44 angeordnet, der über eine Leitung 46 mit dem Steuerteil 26 verbunden ist.

Das Abgabeventil 32 ist über zwei pneumatische Ventile 48 bzw. 50 betätigbar. Beide Ventile 48, 50 sind über Leitungen 52 bzw. 54 mit der Steuerung 42 verbunden. Die pneumatische Versorgung des Ventils 48 erfolgt direkt über eine Quelle 56, während die des Ventils 50 über den Druckschalter 36 erfolgt, der mit der Quelle 56 verbunden ist. Im Anschlußbereich der Abgabeleitungen 22, 20 ist an den Kollektor 18 eine Entgasungsleitung 60 bzw. 62 angeschlossen, wobei jeweils ein Ventil 64 bzw. 66 in der Leitung 60 bzw. 62 angeordnet ist. Die Ventile werden ebenfalls pneumatisch gesteuert, wobei das Ventil 64 über eine Leitung 68 mit einem pneumatischen Ventil 70 verbunden ist, das vom Steuerteil 26 angesteuert wird und mit der pneumatischen Quelle 56 verbunden ist.

Die elektronische Steuerung 42, die auch das Signal vom Turbinenzähler 38 enthält, ist mit einem Drucker 72 verbunden, mit dem z. B. die Abgabemenge ausgedruckt wird. Die Betätigung des Bodenventils 12 erfolgt, wie schon erwähnt, über den Steuerblock 14, der über ein pneumatisches Ventil 74 mit Druckluft versorgt wird, wobei das pneumatische Ventil 74 vom Steuerteil 26 angesteuert ist. Schließlich ist gestrichelt ein zweiter Leermeldesensor 76 angedeutet, der aufströmseitig vom Gasblasensensor 24 angeordnet ist unmittelbar im Anschluß an den Kollektor 18. Er ist über die Signalleitung 78 mit dem Steuerteil 26 verbunden.

Die gezeigte Vorrichtung arbeitet wie folgt.

Bei der Funktionsbeschreibung wird von dem Zustand ausgegangen, bei dem der Teil der Leitung 30, 20, 16 zwischen Abgabeventil 32 und Bodenventil 12 vollständig geleert ist (Restentleerung). Zunächst wird bei geschlossenem Abgabeventil 32 das Bodenventil 12 geöffnet, was mit Hilfe des Steuerblocks 14 erfolgt (wie an sich bekannt), wobei zuvor die Aktivierung über das Steuerteil 26 und das Ventil 74 erfolgt. Die Flüssigkeit in der Kammer 10 fließt dann bis zum Abgabeventil 32 und füllt das komplette Volumen der Leitung 30, 20, 16 bis zum Bodenventil 12 auf. Die hierbei entweichende Luft kann durch das Bodenventil 12 in das Leervolumen der Kammer 10 strömen. Mit Hilfe des Gasblasensensors 24, der etwa so ausgebildet ist, wie in der DE 195 40 884 A1 beschrieben, wird festgestellt, wann die Abgabeleitung 20 komplett gefüllt ist. Nunmehr kann der Abgabevorgang beginnen, indem das Abgabeventil 32 durch Betätigung des Ventils 48 geöffnet wird. Die abgegebene Menge wird mit dem mittelbaren Volumenzähler bzw. Turbinenzähler 38 gemessen und mit der elektronischen Steuerung 42 registriert. Erfolgt eine nicht vollständige Entleerung aus der Kammer 10, und ist ein vorgegebenes Volumen in der Steuerung 42 voreingestellt, stoppt die Steuerung 42 die Entleerung, indem das Ventil 32 über das pneumatische Ventil 48 wieder geschlossen wird. Soll jedoch eine Totalentleerung der Kammer 10 stattfinden, beginnt der Pegel der Flüssigkeit in der Kammer 10 sich dem Bodenventil 12 zu nähern. Der Drucksensor 34 erfaßt den Druck der geodätischen Zulaufhöhe, der stetig abnimmt. Erreicht der Pegel die Nähe des Bodenventils 12, besteht Gefahr, daß durch Wirbelbildung Luft bei der Abgabe mitgerissen wird. Wird etwa das Niveau 80 in der Zeichnung erreicht, wird dies von dem Drucksensor 34 über ein Signal dem Druckschalter 36 mitgeteilt. Der Druckschalter 36 schaltet unmittelbar das Ventil 32 auf einen anderen Strömungsquerschnitt. Das Ventil 32 ist z. B. zweistufig mit einem größeren und einem kleineren Strömungsquerschnitt ausgeführt. Es versteht sich, daß auch mehrere Stufen vorgesehen werden können bzw. eine kontinuierliche Veränderbarkeit des Strömungsquerschnitts. Aufgrund des nunmehr geringeren Strömungsquerschnitts ist die Fließgeschwindigkeit geringer, so daß die Gefahr des Mitreißens von Gasbeimengungen geringer wird. Außerdem läßt sich durch die geringere Geschwindigkeit relativ präzise an einen Pegel abströmseitig des Bodenventils 12 heranfahren, welcher vom Gasblasensensor 24 erfaßt wird. Zu diesem Zeitpunkt ist die Abgabe der Flüssigkeit durch Betätigung des Abgabeventils 32 zu stoppen, was wiederum über den Steuerteil 26 und die Steueranordnung 42 erfolgt.

Anschließend wird das Abgabeventil 32 erneut geöffnet, um eine Restentleerung aus der Leitung 20 zu ermöglichen. Bei der Restentleerung werden die Signale vom Turbinenzähler 38 nicht mehr verwendet, was aus eichtechnischen Gründen auch nicht zulässig wäre. Das Ende der Restentleerung wird vom Leermeldesensor 44 angezeigt.

Sobald die Restentleerung beendet ist, erfolgt wiederum ein Schließen des Abgabeventils 32. Außerdem wird in der Steuerung 42 ein vorab bestimmter bzw. bekannter Volumenbetrag zu dem aufgezählten Volumen hinzuaddiert, der durch die vorangegangene Schwerkraftabgabe erreicht wurde. Dieser Volumenwert entspricht dem Volumen, das zwischen dem Pegel beim Ansprechen des Gasblasensensors 24 und dem Abgabeventil 32 vorhanden ist.

Wird nun aus einer anderen Kammer 10 abgefüllt, ist die Leitung 20 vollständig leer, und es kann zu keiner Produktvermischung kommen.

Das Erreichen des Pegels in der Abgabeleitung 20 vor Beginn der Restentleerung kann auch mit Hilfe des zweiten Leermeldesensors 76 erfolgen, wenn dieser günstiger als der Gasblasensensor 24 positioniert werden kann.

Während des normalen Abgabebetriebes dient der Gasblasensensor 24 dazu, das Mitmessen unerwünschter Gasbeimengungen zu verhindern. Treten Gasanteile oberhalb eines bestimmten Wertes auf, wird über das Steuerteil 26 bzw. die Steuerung 42 das Abgabeventil 32 entweder gedrosselt oder bei einem noch höheren Gasanteil geschlossen. Wenn sich Gas oberhalb des Gasblasensensors 24 im Kollektor 18 ansammelt, werden die Ventile 64, 66 geöffnet, um das Gas in die entsprechende Kammer 10 zurückzuführen oder ins Freie zu entlassen. So sind die Ventile 64, 66 geöffnet, wenn der zweite Leermeldesensor 76 oder der Gasblasensensor 24 eine bestimmte Zeit nicht bedeckt sind oder wenn von außen ein entsprechendes Signal in die Steuerung 42 eingegeben wird, obwohl der zweite Leermeldesensor 76 noch bedeckt ist.

## Patentansprüche

1. Verfahren zum Betrieb einer Anlage zur Abgabe von Flüssigkeit aus einem mehrere Kammern enthaltenden Tankwagen im wesentlichen durch Schwerkraft sowie zum Messen der abgegebenen Flüssigkeit, wobei die Anlage mindestens einen Kollektor zwischen den Bodenventilen des Tankwagens und den Ladekupplungen aufweist zwecks Abgabe der Flüssigkeit für mindestens eine gemeinsame Abgabeleitung und ein Abgabeventil am Ende der Abgabeleitung, mit folgenden Verfahrensschritten:
- am Beginn der Abgabe wird bei geschlossenem Abgabeventil (32) das gewünschte Bodenventil (12) geöffnet, wobei die in der Abgabeleitung (20) verdrängte Luft über das geöffnete Bodenventil und ein - falls vorhanden - bedarfsweise geöffnetes Entlüftungsventil entweicht,
- das Abgabeventil (32) wird geöffnet und - falls vorhanden und geöffnet - das Entlüftungsventil geschlossen, wenn ein Glasblasensensor (24) in der Abgabeleitung (20) aufströmseitig vom Abgabeventil feststellt, daß die Abgabeleitung vollständig gefüllt ist,
- die abgegebene Menge wird mit einem mittelbaren Volumenzähler (38), Z.B. einem Turbinenzähler, in Aufströmrichtung vor dem Abgabeventil gemessen und in einem elektronischen Zählwerk einer elektronischen Steuerung registriert,
- während der Flüssigkeitsabgabe mißt der Gasblasensensor (24) den Gasanteil der abgegebenen Flüssigkeit, und die elektronische Steuerung erzeugt ein Schließsignal für das Abgabeventil, wenn der Gasanteil einen vorgegebenen Wert überschreitet,
- während der Flüssigkeitsabgabe wird der Druck der geodätischen Zulaufhöhe oberhalb eines Druckmeßpunktes (34) gemessen und das Abgabeventil in seinem Strömungsquerschnitt gedrosselt, wenn der Druck einen vorgegebenen unteren Wert erreicht,
- das Abgabeventil wird geschlossen, wenn der Blasensensor einen vorgegebenen zweiten Wert für den Gasanteil ermittelt oder ein Leermeldesensor (44, 76) aufströmseitig vom Volumenzähler anspricht, was einer vorgegebenen Restmenge in der Abgabeleitung bzw. im Kollektor entspricht,
- die Abgabeleitung wird belüftet und die elektronische Registrierung der Zählsignale des Volumenzählers gestoppt,
- das Abgabeventil wird anschließend für die Restentleerung geöffnet, wobei das Bodenventil geschlossen ist, und wieder geschlossen, wenn ein Leermeldesensor kurz vor oder im Abgabeventil die Abwesenheit von Flüssigkeit meldet, und
- die vom Volumen her bekannte Restmenge wird in der elektronischen Steuervorrichtung dem bis dahin registrierten Volumenwert hinzu addiert.

2. Anlage zur Durchführung des Verfahrens nach Anspruch 1, mit folgenden Merkmalen:
- mindestens einem Kollektor (18) zwischen den Bodenventilen (12) und den Befüllkupplungen (90) eines Tankwagens, der über eine ein Gefälle aufweisende Abgabeleitung (20, 22) mit einem in seinem Durchströmquerschnitt verstellbaren Abgabeventil (32) verbunden ist,
- einem mittelbaren Volumenzähler (38) aufströmseitig vom Abgabeventil (32)
- einem Gasblasensensor (24) aufströmseitig vom Volumenzähler (38), der den Gasanteil der Flüssigkeit mißt und ein entsprechendes Signal abgibt,
gekennzeichnet dadurch, daß die Anlage ferner enthält:
- einen Drucksensor (34) aufströmseitig vom Volumenzähler (38), der den Druck der geodätischen Zulaufhöhe oberhalb des Meßpunktes mißt und ein Drucksignal abgibt, wenn der Druck einen unteren Wert erreicht,
- einen Leermeldesensor (44) unmittelbar aufströmseitig von dem oder im Abgabeventil (32) und
- eine elektronische Steuervorrichtung (26, 42), welche die Signale vom Gasblasensensor (24), vom Leermeldesensor (44) und vom Volumenzähler (38) erhält und mit Hilfe dieser Signale die von diesen Signalen abhängigen Verfahrensschritte gemäß Anspruch 1 durchführt.

3. Anlage nach Anspruch 2, dadurch gekennzeichnet, daß ein zweiter Leermeldesensor (76) aufströmseitig vom Gasblasensensor (24) angeordnet ist, dessen Ausgangssignal über die elektronische Steuervorrichtung (26, 42) das Abgabeventil (32) schaltet.

4. Anlage nach Anspruch 2 oder 3, dadurch gekennzeichnet, daß zwischen Kollektor und Gasblasensensor eine propellerartige Beschleunigerpumpe angeordnet ist.

5. Anlage nach einem der Ansprüche 2 bis 4, dadurch gekennzeichnet, daß parallel zur Abgabeleitung (20, 22) zwischen Kollektor (18) und Gasblasensensor (24) eine Verdrängerpumpe angeordnet ist.

6. Anlage nach einem der Ansprüche 2 bis 5, dadurch gekennzeichnet, daß mit der Abgabeleitung (20, 22) aufströmseitig vom Gasblasensensor (24) eine ein Ventil (64, 66) aufweisende Be- bzw. Entlüftungsleitung (60, 62) verbunden ist, die vorzugsweise zur Kammer (10) rückgeführt ist.

## Claims

1. A method for operating an installation for dispensing fluid from a tanker containing several chambers essentially by gravity as well as for measuring the dispensed fluid, wherein the installation comprises at least one collector between the base valves of the tanker and the supply couplings for the purpose of dispensing the fluid for at least one common dispensing conduit and a dispensing valve at the end of the dispensing conduit, with the following method steps:
- at the beginning of the dispensing with a closed dispensing valve (32) the desired base valve (12) is opened, wherein the air displaced in the dispensing conduit (20) escapes via the opened base valve and, if present, - when required - via an opened bleeding valve,
- the dispensing valve (32) is opened and - if present and opened - the bleeding valve closed when a gas bubble sensor (24) in the dispensing conduit (20) on the upstream side of the dispensing valve ascertains that the dispensing conduit is completely filled,
- the dispensed quantity is measured with an indirect volume metre (38), e.g. a turbine metre in the upstream direction in front of the dispensing valve and is registered in an electronic counter of an electronic control,
- during the fluid dispensing the gas bubble sensor (24) measures the gas component of the dispensed fluid, and the electronic control produces a closing signal for the dispensing valve when the gas component exceeds a predetermined value,
- during the fluid dispensing the pressure of the geodetic head above a pressure measuring point (34) is measured and the dispensing valve is throttled in its flow cross section when the pressure has reached a predetermined lower value,
- the dispensing valve is closed when the bubble sensor determines a predetermined second value for the gas component or and empty-indication sensor (44, 76) on the upstream side of the volume metre responds, this corresponding to a predetermined residual quantity in the dispensing conduit or in the collector,
- the dispensing conduit is ventilated and the electronic registering of the counter signals of the volume metre is stopped,
- the dispensing valve is subsequently opened for the residual emptying wherein the base valve is closed, and again closed when an empty-indication sensor shortly in front of or in the dispensing valve indicates the absence of fluid and
- the residual quantity known in volume is added in the electronic control device to the volume value registered up to then.

2. An installation for carrying of the method according to claim 1, with the following features:
- at least one collector (18) between the base valves (12) and the filling couplings (90) of a tanker, which via a dispensing conduit (20, 22) having a drop being connected to a dispensing valve (32) adjustable in its cross section,
- an indirect volume metre (38) on the upstream side of the dispensing valve (32)
- a gas bubble sensor (24) on the upstream side of the volume metre (38), which measures the gas component of the fluid and emits a corresponding signal,
characterised in that the installation further contains:
- a pressure sensor (34) on the upstream side of the volume metre (38), which measures the pressure of the geodetic head above the measuring point and emits a pressure signal when the pressure reaches a lower value,
- an empty-indication sensor (44) directly on the upstream side in front of or in the dispensing valve (32) and
- an electronic control device (26, 42) which receives the signals from the gas bubble sensor (24), from the empty indication sensor (44) and from the volume metre (38), and with the help of these signals carries out method steps, dependent on these signals, according to claim 1.

3. An installation according to claim 2, characterised in that a second empty-indication sensor (76) is arranged on the upstream side of the gas bubble sensor (24), whose exit signal via the electronic control means (26, 42) switches the dispensing valve (32).

4. An installation according to claim 2 or 3, characterised in that between the collector and gas bubble sensor there is arranged a propeller-like accelerator pump.

5. An installation according to one of the claims 2 to 4, characterised in that parallel to the dispensing conduit (20, 22) between the collector (18) and the gas bubble sensor (24) there is arranged a displacement pump.

6. An installation according to one of the claims 2 to 6, characterised in that to the dispensing conduit (20, 22) on the upstream side of the gas bubble sensor there is connected a ventilation or bleeding conduit (60, 62) which comprises a valve, 64, 66) and is preferably lead back to the chamber (10).

## Revendications

1. Procédé pour l'exploitation d'une installation de distribution de liquide à partir d'un wagon-citerne contenant plusieurs compartiments essentiellement par la pesanteur, ainsi que pour la mesure du liquide distribué, l'installation comportant au moins un collecteur entre les vannes de fond du wagon-citerne et les raccords de chargement dans le but de distribution du liquide pour au mois une conduite de distribution commune et une vanne de distribution à l'extrémité de la canalisation de distribution, avec les étapes de procédé suivantes :
- au commencement de la distribution, la vanne de distribution (32) étant fermée, la vanne de fond (12) souhaitée est ouverte, l'air déplacé dans la canalisation de distribution (20) s'échappant par la vanne de fond ouverte et une vanne de purge ouverte, si elle existe et si besoin est,
- la vanne de distribution (32) est ouverte et - si elle existe et est ouverte - la vanne de purge est fermée, si un capteur (24) de bulles de gaz dans la canalisation de distribution (20) en amont de la vanne de distribution constate que la canalisation de distribution est complètement remplie,
- la quantité distribuée est mesurée par un compteur volumétrique (38) indirect, par exemple un compteur à turbine, en amont de la vanne de distribution et enregistré dans un compteur électronique d'une commande électronique,
- pendant la distribution du liquide, le capteur (24) de bulles de gaz mesure la part de gaz du liquide distribué et la commande électronique produit un signal de fermeture pour la vanne de distribution, si la part de gaz devient supérieure à une valeur donnée,
- pendant la distribution de liquide, la pression de la charge différentielle géodésique au-dessus d'un point de mesure de pression (34) est mesurée et la vanne de distribution est étranglée dans sa section d'écoulement, si la pression atteint une valeur inférieure donnée,
- la vanne de distribution est fermée, si le capteur de bulles détermine une deuxième valeur donnée pour la part de gaz ou si un capteur indicateur de vide (44, 76) en amont du compteur volumétrique réagit, ce qui correspond à une quantité restante donnée dans la canalisation de distribution et dans le collecteur,
- la canalisation de distribution est aérée et l'enregistrement électronique des signaux de comptage du compteur volumétrique est arrêté,
- la vanne de distribution est ensuite ouverte pour la purge du reste, la vanne de fond étant fermée, et de nouveau fermée si un capteur indicateur de vide signale l'absence de liquide peu avant ou dans la vanne de distribution, et
- la quantité restante connue par le volume est additionnée dans le dispositif de commande électronique à la valeur de volume enregistrée jusqu'alors.

2. Installation pour l'exécution du procédé selon la revendication 1, avec les caractéristiques suivantes :
- au moins un collecteur (18) entre les vannes de fond (12) et les raccords de remplissage (90) d'un wagon-citerne, qui est relié par une canalisation de distribution (20, 22) présentant une pente à une vanne de distribution (32) réglable dans sa section de passage d'écoulement,
- un compteur volumétrique (38) indirect en amont de la vanne de distribution (32)
- un capteur de bulles de gaz (24) en amont du compteur volumétrique (38), qui mesure la part de gaz du liquide et émet un signal correspondant,
caractérisée en ce que l'installation comprend en outre :
- un capteur de pression (34) en amont du compteur volumétrique (38), qui mesure la charge différentielle géodésique au-dessus du point de mesure et émet un signal de pression, si la pression atteint une valeur inférieure
- un capteur indicateur de vide (44) directement en amont de la vanne de distribution (32) ou dans celle-ci et
- un dispositif de commande électronique (26, 42), qui reçoit les signaux du capteur de bulles de gaz (24), du capteur indicateur de vide (44) et du compteur volumétrique (38), et à l'aide de ces signaux, exécute les étapes du procédé dépendant de ces signaux selon la revendication 1.

3. Installation selon la revendication 2, caractérisée en ce qu'un deuxième capteur indicateur de vide (76) est placé en amont du détecteur de bulles de gaz (24), dont le signal de sortie commute la vanne de distribution (32) par l'intermédiaire du dispositif de commande électronique (26, 42).

4. Installation selon la revendication 2 ou 3, caractérisée en ce qu' une pompe accélératrice du type à hélice est placée entre le collecteur et le détecteur de bulles de gaz.

5. Installation selon l'une des revendications 2 à 4, caractérisée en ce qu'une pompe volumétrique est placée en parallèle à la canalisation de distribution (20, 22) entre le collecteur (18) et le détecteur de bulles de gaz(24).

6. Installation selon l'une des revendications 2 à 5, caractérisée en ce qu'une canalisation d'aération ou de purge (60, 62) comportant une vanne (64, 66), et qui, de préférence, fait retour au compartiment (10), est reliée à la canalisation de distribution (20, 22) en amont du détecteur de bulles de gaz (24).
